# EUROPEAN PATENT APPLICATION

(11) **EP 2 811 369 A1**
(43) Date of publication of application: **10.12.2014**
(21) Application number: 13189488.3
(22) Date of filing: 21.10.2013
(51) Int. Cl.: G06F 3/01, G06F 3/0481, G06F 3/0484

(54) **Method of moving a cursor on a screen to a clickable object and a computer system and a computer program thereof**

(30) Priority: 03.06.2013 TW 102119654
(71) Applicant: Utechnzone Co., Ltd., New Taipei City 23553 (TW)
(72) Inventor: Lin, Po-Tsung, 23553 New Taipei City (TW); Shih, Hsun-Kang, 23553 New Taipei City (TW)
(74) Representative: Viering, Jentschura & Partner Patent- und Rechtsanwälte

(57) **Abstract**

A method of moving a cursor on a screen to a clickable object, which comprises steps of receiving coordinates of a gaze point; obtaining information of a plurality of first clickable objects on the display image; searching a second clickable object that covers the gaze point from the first clickable objects; and moving the cursor to the found clickable object, wherein the coordinates of the gaze point corresponds to a point position of a display image on a screen where a user gazed. A computer system and a computer program for carrying out the aforementioned method are also disclosed. The present invention is to control the cursor on the screen to move quickly to the center of the clickable object, or to the clickable object whose center coordinates is closest to a point where user gazes, allowing user to enjoy the convenience of controlling the computer with their eyes.

## Description

### BACKGROUND OF INVENTION

### 1. Field of Invention

The invention relates to a computer system that utilizes eye tracking technology and graphical user interface (GUI), and more especially to a technology that can facilitate user to control a cursor by using their eyes.

### 2. Related Prior Art

In order to well use computers, current operating systems of the computers such as Windows® or Linux® use graphical user interface (hereinafter called GUI) that allows users to interact with the computer. The GUI used windows and various clickable objects, like menu bars, icons, buttons and etc to render the users click or select. They represent the running applications. For example, when the users press an icon on a desktop representing an application, the application is activated and performs in an operating window. If the users press another icon representing another application, another operating window would be displayed to show the application that is run. Thus, it is convenient for ordinary persons to operate computers by using GUI. However, it is quite inconvenient for those who suffer from Amyotrophic lateral sclerosis (ALS), Muscular dystrophy (MD), Cerebral palsy (CP), Spinal Cord injury (SCI), Multiple Sclerosis (MS), Cerebral vascular accident (CVA) and etc. that makes them progressive immobility, even inability to speak to use the computers by using traditional GUI.

Those persons as mentioned above may still use eye control well. At present, there are a lots of technology that can detect eye movements for control purpose have been developed, which help those persons to communicate with others conveniently. Specifically, they can use their eye to control computers for communication. For example, when the users gaze at a computer screen, system would found the point of gaze (coordinates) by allowing the line of gaze to intersect with the computer screen being viewed, thereby producing an effective and efficient cursor control on the screen. However, the fact is that the GUI system of the present art are inconvenient to use for those persons with disabilities. Accordingly, there is a need to provide a system or a program including a clickable object in the GUI, which allow users to click conveniently, and efficiently by using their eyes.

### SUMMARY OF INVENTION

The present invention is directed to a method of moving a cursor on a screen to a clickable object, which comprises steps of receiving coordinates of a gaze point; obtaining information of a plurality of first clickable objects on the display image; searching a second clickable object that covers the gaze point from the first clickable objects; and moving the cursor to the second clickable object, wherein the coordinates of the gaze point corresponds to a point position of the display image on a screen where a user gazed. The above-mentioned step of moving the cursor is preferably to move the cursor at a center of the second clickable object.

The step of obtaining information of the first clickable objects on the display image further comprises substeps of obtaining a main window information at the bottom layer on the display image; searching a subwindow information at the top layer of the display image, wherein the subwindow information includes the coordinates of the gaze point; and determining the second clickable object on the subwindow.

In addition, if the second clickable object fails to be determined, the step mentioned above can further comprise the following substeps of establishing an adjacent region surrounding the gaze point with the coordinates of the gaze point as its center; comparing the coordinates of the first clickable objects with the adjacent region to determine whether there is any one of the first clickable objects that locates on the adjacent region; selecting one of the first clickable objects whose center coordinates is closest to the gaze point from the first clickable objects located on the adjacent region if there are several the first clickable objects that locate on the adjacent region; and moving the cursor to the center coordinates of the selected clickable object. Specifically, the adjacent regions has eight points, four of the eight points respectively locate at four vertices of the square, and the other four points respectively locate at a middle of each side length of the square.

The step of comparing the coordinates of the first clickable objects with that of the adjacent regions is only to compare the coordinates of the first clickable objects with coordinates of the eight points of the adjacent regions to determine whether there is any one of the first clickable objects that locates at the eight points. If there is only one clickable object that locates at the coordinates of the eight points, the cursor is thus moved directly to the center of the selected clickable object. If there are several clickable objects locating at the coordinates of the eight points, these clickable objects are compared to determine which one of the first clickable objects whose center coordinates is closest to the coordinates of the gaze point.

The present invention is also directed to a computer system, which comprises a screen and an image-capturing device. The computer system can perform an image processing program and a cursor position processor program. The images can be analyzed and processed by the image processing program of the computer system to obtain the coordinates of the gaze point, and then the cursor position processor program can be thus run. The cursor position processor program is to perform the above-mentioned steps of the method.

The present invention further discloses a computer program, which comprises a computer readable medium. The computer readable medium includes computer readable codes enabling a computer to perform the above-mentioned method according to the present invention.

Nevertheless, the present invention is designed to control the cursor on the screen to move quickly to a center of the clickable object, or to a center of the clickable object that is closest to a point where user gazes on the screen. Accordingly, the present invention achieves functions that allow users to operate a computer conveniently by using their eyes.

Other features, objects, aspects and advantages will be identified and described in detail below.

### BRIEF DESCRIPTION OF DRAWINGS

FIG. 1 is a perspective view of the computer system in accordance with an embodiment of the present invention.
FIG. 2 is a block diagram of the computer system in accordance with an embodiment of the present invention.
FIG. 3 is a perspective view of a screenshot on the screen of FIG. 1.
FIG. 4 is a process flow diagram that illustrates a method for allowing the cursor on the screen to move to the clickable object in accordance with an embodiment of the present invention.
FIG. 5 is a process flow diagram in accordance with an embodiment of the present invention.
FIG. 6 is a process flow diagram in accordance with an embodiment of the present invention.

### DETAILED DESCRIPTION OF EMBODIMENTS

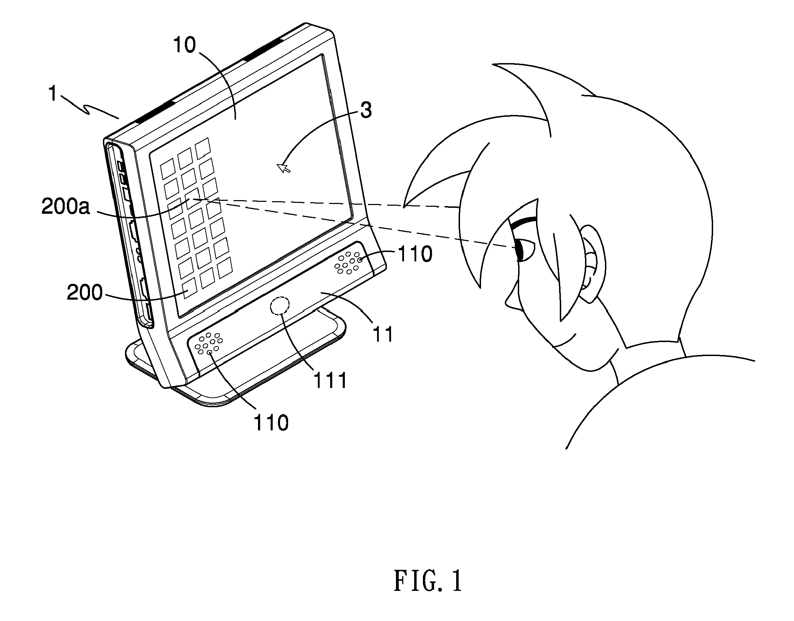

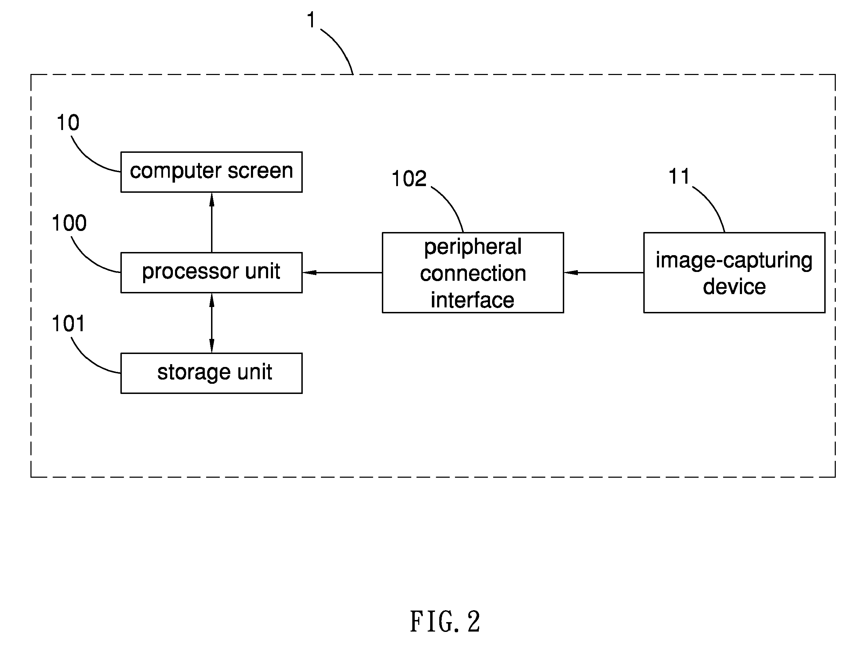

With reference to FIG. 1, a computer system 1 is shown in accordance with an embodiment of the present invention. The computer system 1 comprises a computer screen 10, an image-capturing device 11 and a computer operating mechanism located behind the computer screen 10. With reference to FIG. 2, a block diagram of the computer system 1 is shown in accordance with an embodiment of the present invention. The computer operating mechanism at least comprises, but not limited to, a processor unit 100 including a central processing unit (CPU) and a random-access memory (RAM), a storage unit 101 (such as a hard disk) and a peripheral connection interface 102 (such as network interface). The storage unit 101 storages operating systems with GUI like Windows® operating system and codes that can enable the processor unit to execute an image processing program and a cursor positioning processor program. The codes can be recorded in advance in a computer readable medium (such as a compact disk) for computer to upload and execute.

The image-capturing device 11 connects with the processor unit through network interface. The image-capturing device 11 mainly comprises a CCD or a COM camera unit 111 and two sets of IR LED light sources 110. First of all, the two sets of the IR LED light sources 110 project on the user's face. Then, the camera unit 111 is used to obtain successive images including images of user's eyes.

The storage unit 101 storages operating systems with GUI like Windows® operating system and codes that enable the processor unit to execute an image processing program and a cursor positioning processor program. The codes can be recorded in advance in a computer readable medium (such as a compact disk) for computer to upload and execute. The computer system 1 is operated under the operating system and is to show a cursor 3 (or called mouse cursor) and several clickable objects 200 on the computer screen 10.

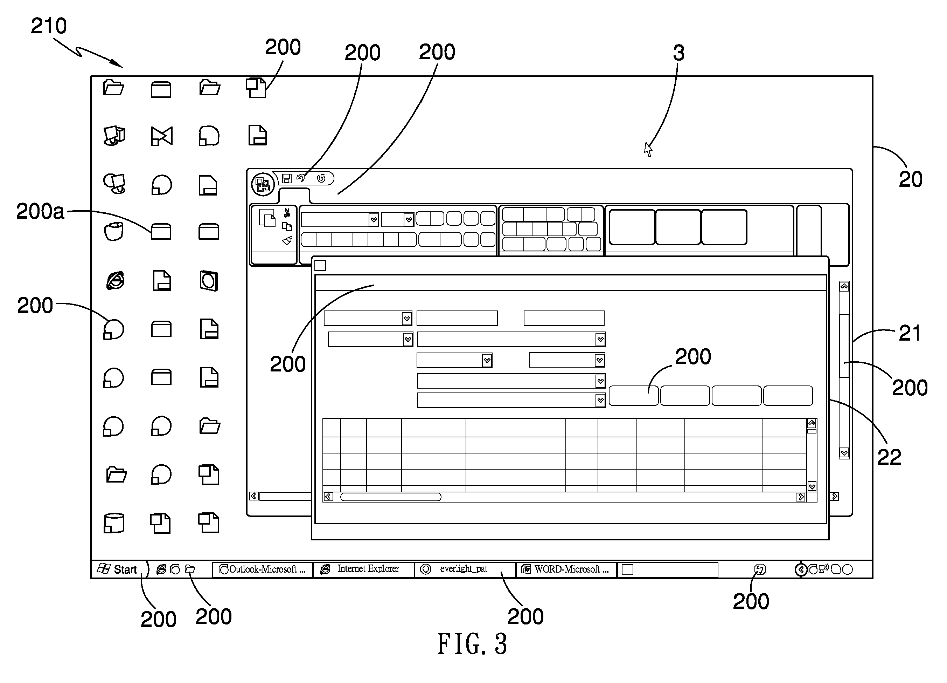

FIG. 3 is a perspective view of a display image 210 on the computer screen 10 of FIG. 1. The display image 210 consists of several objects. For example, there are main window 20 at the bottom layer, subwindows 21, 22 and several clickable objects 200. In this embodiment, the main window 20 at the bottom layer is actually a desktop of Windows. The subwindow 22 is a subwindow at the top layer. The aforementioned clickable objects 200 are icons that are located on the main window 20 at the bottom layer; alternatively, the clickable objects 200 can be buttons, menu bars, control items that are clickable and etc., which are on the main widow 20 and the subwindows 21, 22, respectively. All of the objects on the screen, including clickable, non-clickable or even hidden objects, represent information like object features, object events and so on, which can be obtained by running an Application Programming Interface (API) from the operating system. Take icon as an example of the clickable objects 200 mentioned above. The available object features include, but not limited to, coordinates, size and so on. The position and scale of the icon on the display image 210 can be recognized from the information. Likewise, the position and scale of the other clickable objects 200 like buttons can be also recognized from the information.

People who suffer from Amyotrophic lateral sclerosis (ALS), Muscular dystrophy (MD), Cerebral palsy (CP), Spinal Cord injury (SCI), Multiple Sclerosis (MS), Cerebral vascular accident (CVA) and etc. become immobile, even unable to speak. This causes them to be unable to use the mouse to move the cursor and click any clickable objects 200 on the display image 210 like ordinary people do. Nevertheless, the present invention provides a method that allows those persons to control the cursor 3 to move to the clickable object 200 quickly that he or she wants by using their eyes. Also, they can activate the clickable objects 200 with an intentionally prolonged gaze by using their eyes, thereby running application programs or functions that relates to the clickable objects 200. This is equivalent to clicking the clickable objects through their eyes.

As shown in FIGS. 1 and 3, when a user (such as people with ALS) watches the computer screen 10 and would like to click a clickable object 200a, such as an icon, his eyes would gaze at the clickable objects 200a on the display image 210, which substantially gazes at a point of the screen 10. The aforementioned image-capturing device 11 of the computer system 1 captures images including images of user's eyes and face. After that, the captured images are analyzed and processed by the computer operating mechanism of the computer system 1 to obtain coordinates of a gaze point on the display image 210. The process of obtaining the coordinates of the gaze point on the display image 210 can be accomplished by the prior art, such as Taiwan Patent No. I362005, I356328 and Taiwan Patent Publication No. 201124917 · 201035813 · 201016185 and so on. The coordinates of the gaze point mentioned above correspond to a point position of the display image 210 of the screen computer 10. It is noted that the coordinates of the gaze point computed by the computer system 1 based on the aforementioned images may not be located exactly at the coordinates of the clickable object 200a or within a range that the clickable object 200a occupies even though the user himself/herself feels that he/she gazes at the clickable object 200a. Nevertheless, the coordinates of the gaze point computed by the computer system 1 still represent a point position where the user gazes.

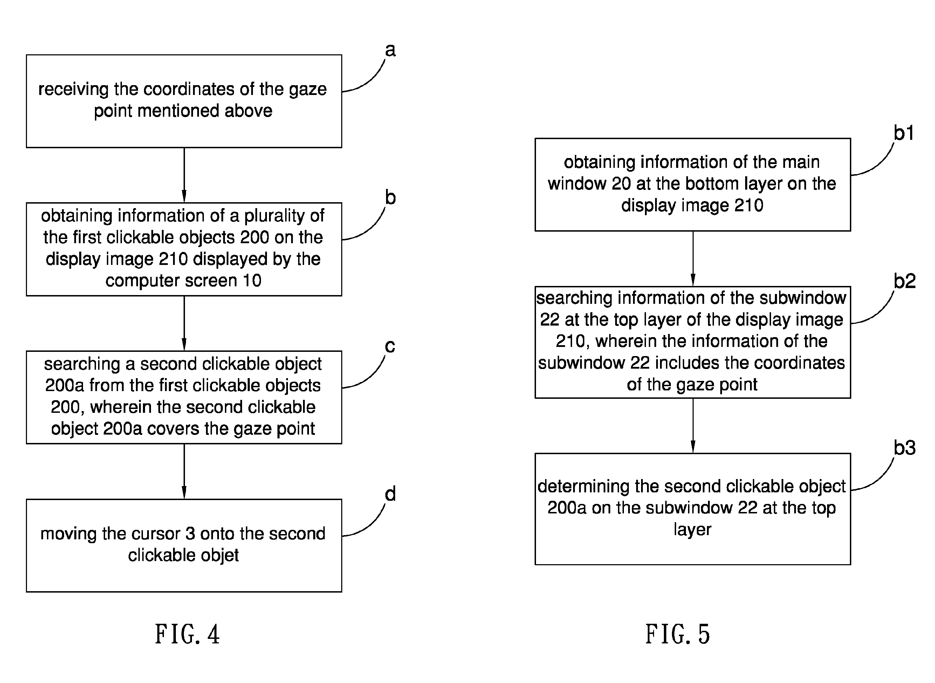

The cursor position processor program mentioned above is then performed after obtaining the coordinates of the gaze point from the computer system 1. It is apparently that this process is one of the steps of the present invention. FIG. 4 is a process flow diagram that illustrates a method for allowing the cursor on the screen to move to the clickable object in accordance with an embodiment of the present invention. The method comprises the following steps of:
a. receiving the coordinates of the gaze point mentioned above;
b. obtaining information of a plurality of the first clickable objects 200 on the display image 210 displayed by the computer screen 10;
c. searching a second clickable object 200a from the first clickable objects 200, wherein the second clickable object 200a covers the gaze point; and
d. moving the cursor 3 onto the second clickable objet.

The purpose of the step b is to obtain information of all of the objects on the display image 210 of the computer screen 10. These objects consist of the screen that user would see. It is understood that the object features can be read to further identify which object is not qualified. For example, the hidden objects or zero-size objects are not acceptable. The clickable objects 200 like icons or buttons therefore remain after excluding those unacceptable objects. If the display image 210 currently shown by the computer screen 10 is like the image of FIG. 3 that includes several subwindows 21, 22, the step b further comprises the following substeps as shown in FIG. 5:
b1. obtaining information of the main window 20 at the bottom layer on the display image 210;
b2. searching information of the subwindow 22 at the top layer of the display image 210, wherein the information of the subwindow 22 includes the coordinates of the gaze point; and
b3. determining the second clickable object 200a on the subwindow 22 at the top layer.

The way to search the second clickable object 200a that covers the gaze point in the step c further comprises the following substeps: comparing the coordinates of the gaze point with each of the coordinates of the first clickable objects 200 and the range that they occupy to see which one of the first clickable objects 200 covers the gaze point thereon.

Preferably, the step d is to move the cursor 3 automatically at the center of the second clickable object 200a. This would make user clearly understand that the cursor 3 has been moved onto the second clickable object 200a where he/she looks at.

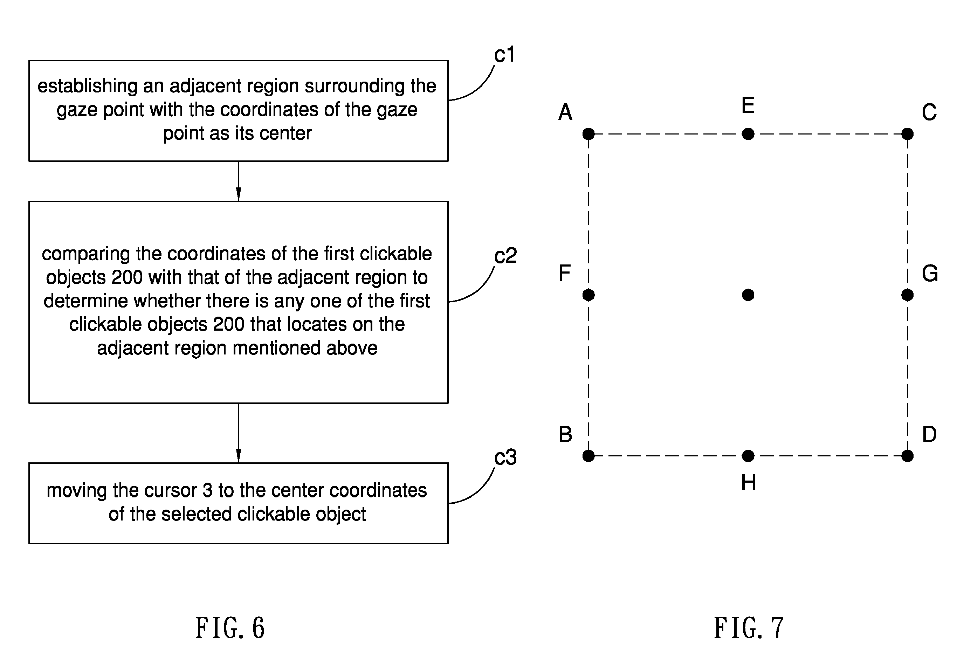

According to the above illustration, the steps c is to search the second clickable object 200a that covers the gaze point. However, there might be a chance to find out nothing sometimes in the step c, which means that the coordinates of the gaze point does not locate on the range of any first clickable objects 200. As shown in FIG. 6, the step c can further comprises the following substeps of:
c1. establishing an adjacent region surrounding the gaze point with the coordinates of the gaze point as its center;
c2. comparing the coordinates of the first clickable objects 200 with that of the adjacent region to determine whether there is any one of the first clickable objects 200 that locates on the adjacent region mentioned above; wherein if there are several the first clickable objects 200 that locate on the adjacent region, one of the first clickable objects 200 whose center coordinates is closest to the gaze point is thus selected from the first clickable objects 200 that locate on the adjacent region; and
c3. moving the cursor 3 to the center coordinates of the selected clickable object.

Preferably, the adjacent region on the display image 210 is in square shape with the coordinates of the gaze point as its center, as shown in FIG. 7. In one embodiment, the adjacent region is an area that is defined as its side length times itself, wherein the side length thereof can be 20 pixel. The adjacent region has eight points. Four of the eight points from A to D respectively locate at four vertices of the square, and the others from E to H respectively locate at the middle of each side length of the square. In one embodiment, the step c2 includes comparing the coordinates of the first clickable objects with the coordinates of the eight points from A to H of the adjacent regions to determine whether there is any one of the coordinates of the first clickable objects 200 that locates at the coordinates of the aforementioned eight points from A to H. If there is only one clickable object 200 locating at the coordinates of the eight points, the cursor 3 is thus moved directly onto the center of the selected clickable object. If there are several clickable objects locating at the coordinates of the eight points from A to H, these clickable objects are compared to determine which one of the first clickable objects whose center coordinates is closest to the coordinates of the gaze point. Once the second clickable object is determined, and therefore the cursor 3 is then moved onto the center of the second clickable object whose center coordinates is closest to the coordinates of the gaze point.

There is no need to perform the step of moving the cursor 3 if non of the clickable objects 200 closest to the coordinates of the gaze point is selected after performing the steps c1-c2. At present, the image-capturing device 11 of the computer system 1 re-captures user's images, and then the images are analyzed and processed by the image processing program and the cursor position processor program. Once the cursor 3 is moved onto the second clickable object 200a where the coordinates of the gaze point sits or onto the second clickable object 200a whose center coordinates is closest to the coordinates of the gaze point, the user can activate the second clickable object 200 with an intentionally prolonged gaze by using their eyes. In one embodiment, there is a function menu on a side of the display image 210. The function menu has several icons, which respectively represents a specific operating function, for example, left-single-clicking function that simulate one of functions of the mouse, right-single-clicking function that simulate one of functions of the mouse, dragging function that simulate one of functions of the mouse, magnifier function and so on. The above-mentioned functions are performed with an intentionally prolonged gaze through user's eyes.

It is understood that the present invention is designed to efficiently facilitate user to aim at objects or items on the computer screen that he/she wants to point to. Compared with the present invention, it is quite easy for the computer system of the prior art to cause a problem of an incorrect mouse cursor position when there are plenty of objects arranged on the windows or subwindows. For instant, the mouse cursor position may point to a position where is not what the user wants. Also, it may exist some other problems of waste of time and energy. Specifically, it is necessary for user to pay more attention and spend a lot of time on aiming at the objects or positioning the objects because of too much objects shown on the screen. However, the method for positioning cursor of the present invention can efficiently improve accuracy of cursor positioning and reduce time on aiming at the objects.

It will be appreciated that although a particular embodiment of the invention has been shown and described, modifications may be made. It is intended in the claims to cover such modifications which come within the spirit and scope of the invention.

## Claims

1. A method of moving a cursor on a screen to a clickable object comprising:
receiving coordinates of a gaze point, wherein the coordinates of the gaze point correspond to a point position of a display image on the screen where is gazed by a user;
obtaining information of a plurality of first clickable objects on the display image;
searching a second clickable object from the first click objects, wherein the second clickable object covers the gaze point; and
moving the cursor to the second clickable object.

2. The method of claim 1, wherein the step of moving the cursor includes moving the cursor at a center of the second clickable object.

3. The method of claim 1, wherein the step of obtaining information of the first clickable objects on the display image further comprises:
obtaining a main window information at the bottom layer on the display image;
searching a subwindow information at the top layer of display image, wherein the subwindow information includes the coordinates of the gaze point; and
determining the second clickable object on the subwindow.

4. The method of claim 1, further comprising following steps if the second clickable object is failing to determine:
establishing an adjacent region surrounding the gaze point ;
comparing the coordinates of the first clickable objects with that of the adjacent region to determine whether there is any one of the first clickable objects that locates on the adjacent region;
selecting one of the first clickable objects whose center coordinates is closest to the gaze point from the first clickable objects located on the adjacent region if there are several the first clickable objects that locate on the adjacent region; and
moving the cursor to the center coordinates of the selected clickable object.

5. The method of claim 4, wherein the adjacent region has eight points, four of the eight points respectively locate at four vertices of the square, and the other four points respectively locate at a middle of each side length of the square.

6. The method of claim 5, wherein the comparing step includes comparing the coordinates of the first clickable objects with that of the eight points to determine whether there is any one of the coordinates of the first clickable objects that locates at the coordinates of the eight points.

7. The method of claim 5, wherein the selecting step includes if there are several clickable objects locating at the coordinates of the eight points, these clickable objects are compared to determine which one of the first clickable objects whose center coordinates is closest to the coordinates of the gaze point.

8. The method of claim 4, wherein the moving step includes moving the cursor onto the center of the selected clickable object.

9. A computer system that displays a cursor and a plurality of clickable objects on a display image through a screen, and captures images including images of user's eyes and face by a image-capturing device, wherein the computer system performs a image processing program and a cursor position processor program; the image processing program analyzes and processes the images to obtain coordinates of a gaze point; wherein the coordinates of the gaze point correspond to a point on the screen where the user gaze at; and wherein the cursor position processor program receives the coordinates of the gaze point, obtains information of plurality of first clickable objects on the display image, searching a one of the first clickable objects that includes the coordinates of the gaze point, and moves the cursor to the searched clickable object.

10. A computer program product comprising a computer readable medium, the computer readable medium including computer readable codes, wherein the computer readable codes enable a computer to receive coordinates of a gaze point, obtain information of a plurality of first clickable objects on a display image, search a one of the first clickable objects that includes the coordinates of the gaze point, and move a cursor to the searched clickable object, wherein the coordinates of the gaze point correspond to a point of the display image on a screen where a user gazed at.
